# EUROPÄISCHE PATENTSCHRIFT

(11) **EP 1 588 903 B1**
(45) Veröffentlichungstag und Bekanntmachung des Hinweises auf die Patenterteilung: **30.08.2006**
(21) Anmeldenummer: 05008387.2
(22) Anmeldetag: 18.04.2005
(51) Int. Cl.: B60R 19/48

(54) **Haltevorrichtung für einen Sensor**
Holding device for a sensor
Dispositif de support pour un capteur

(30) Priorität: 20.04.2004 DE 102004021005
(43) Veröffentlichungstag der Anmeldung: 26.10.2005
(73) Patentinhaber: Decoma (Germany) GmbH, 66280 Sulzbach (DE)
(72) Erfinder: Gau, Harry, 66386 St. Ingbert (DE)
(74) Vertreter: Hössle Kudlek & Partner

(56) Entgegenhaltungen:
- EP-A- 1 083 099
- DE-A1- 19 939 747
- US-B1- 6 203 366

## Beschreibung

Die Erfindung betrifft eine Haltevorrichtung für einen Sensor zur Anbringung an einem Teil mit einer Öffnung, und ein Verfahren zum Anbringen eines Sensors an einem solchen Teil.

Eine Halte vorrichtung nach dem Oberbegriff des Anspruchs 1 ist aus US 6 203 366 bekannt.

Im Automobilbau kommen zahlreiche Sensoren für die verschiedensten Anwendungen zum Einsatz, die mittels geeigneter Haltevorrichtungen in oder an der Fahrzeugkarosserie angebracht sind. Für Systeme zur Abstandsermittlung von anderen Fahrzeugen, die bspw. als Parktronic-Systeme bekannt sind, werden im allgemeinen Ultraschallsensoren eingesetzt, die mit geeigneten Halterungen in oder an einer Öffnung der Stoßstange befestigt sind.

Herkömmlich ist im Zusammenhang mit der Anbringung eines Ultraschallsensors an einem Stoßfänger ein Verkleben einer Haltevorrichtung, in der der Sensor aufgenommen werden kann, rückwärtig an einer Innenfläche des Stoßfängers bekannt. Hierzu weist die Haltevorrichtung eine mit Klebstoff versehene Stirnplatte auf, die an die Innenfläche des Stoßfängers geklebt wird. Vor einem Kontakt des Klebstoffs an der Stirnplatte mit der Innenfläche des Stoßfängers ist jedoch der Einsatz eines Zentrierstabes oder ähnlicher Hilfsmittel erforderlich, um die Haltevorrichtung wie gewünscht mit einer Öffnung in dem Stoßfänger auszurichten. Bei unsachgemäßer Handhabung des Zentrierstabes erfolgt ein falsch zentriertes Verkleben der Haltevorrichtung mit dem Stoßfänger, was im Falle eines bereits zu stark ausgehärteten Klebstoffes zu kostenträchtigem Ausschuß des gesamten Stoßfängers führt. Des weiteren ist die Qualität einer solchen manuellen Befestigung der Haltevorrichtung an der Innenfläche des Stoßfängers stets von der Geschicklichkeit einer Bedienperson abhängig.

Zur Befestigung eines Ultraschallwandlers an einem Stoßfänger ist aus der DE 38 12 182 A1 ein Gehäuse bekannt, in dem der Ultraschallwandler aufgenommen ist. Das Gehäuse ist von der Außenseite des Stoßfängers her in eine Öffnung des Stoßfängers eingesetzt und stützt sich mit einem umlaufenden randseitigen Flansch am Stoßfänger ab. Das Gehäuse ist im unteren Bereich über eine Steckverbindung und im oberen Bereich über ein federndes Befestigungselement mit dem Stoßfänger verbunden. Eine solche Anordnung des Ultraschallwandlers hat jedoch den Nachteil, daß zur Unterbringung des Ultraschallwandlers relativ großflächige Gehäuse bzw. Öffnungen am Stoßfänger vorzusehen sind, die einen verhältnismäßig großen Bauraum beanspruchen und aufgrund ihrer Größe ggf. den Designvorgaben zuwiderlaufen.

Aus der DE 199 43 293 C2 ist eine Halteeinrichtung für einen Ultraschallwandler an einem Außenteil eines Kraftfahrzeuges bekannt, die eine Halteplatte mit einem hohlkörperartigen Aufnahmeabschnitt und einen Adapter aufweist. Der hohlkörperartige Aufnahmeabschnitt ist an einer Fläche des Außenteils des Kraftfahrzeuges angeformt. Der Adapter nimmt den Ultraschallwandler in sich auf und ist in den angeformten hohlkörperartigen Aufnahmeabschnitt der Halteeinrichtung eingesteckt und wirkt mit dem Aufnahmeabschnitt über eine lösbare Rastverbindung zusammen. Eine solche Anordnung des Ultraschallwandlers an einem Außenteil eines Kraftfahrzeuges unterliegt dem Nachteil, daß zum Anbringen des Adapters zunächst die Halteplatte an einer Fläche des Außenteils anzuformen ist, was die Kosten eines solchen Außenteils ansteigen läßt.

Der Erfindung liegt die Aufgabe zugrunde, ein Anbringen eines Sensors an einem Teil mit einer Öffnung, insbesondere an einem Kraftfahrzeug-Außenteil, mit weniger Aufwand und größerer Präzision in bezug auf die Öffnung des Teils zu ermöglichen.

Zur Lösung dieser Aufgabe werden erfindungsgemäß eine Haltevorrichtung mit den Merkmalen des Anspruchs 1 und ein Verfahren mit den Merkmalen des Anspruchs 13 vorgeschlagen. Vorteilhafte Weiterbildungen der Erfindung sind Gegenstand der abhängigen Ansprüche.

Durch die erfindungsgemäße Haltevorrichtung läßt sich ein Sensor, insbesondere ein Ultraschallsensor, ein Radarsensor oder dergleichen, vorteilhaft an einer Innenfläche eines Teils in bezug auf eine darin ausgebildete Öffnung derart anbringen, daß ein Randbereich einer Stirnfläche des Sensors, die dem Teil zugewandt ist, einen genau gleichmäßigen Abstand zu einem Randbereich der in dem Teil vorgesehenen Öffnung einnimmt. Dies wird in sehr einfacher Weise dadurch erzielt, daß innerhalb einer Öffnung einer Stirnplatte der Haltevorrichtung ein Zusatzkörper angebracht ist, dessen von der Stirnplatte nach außen abkragender Vorsprung in seiner Außenkontur geeignet auf die Innenkontur der in dem Teil vorgesehenen Öffnung abgestimmt ist. Hierdurch greift beim Befestigen der Stirnplatte an einer Innenfläche des Teils der Vorsprung in die Öffnung des Teils ein, wobei die Öffnung der Stirnplatte in bezug auf die Öffnung des Teils zentrisch ausgerichtet wird.

Der Zusatzkörper kann innerhalb der Öffnung der Stirnplatte durch lösbare Befestigungsmittel angebracht sein. Zweckmäßigerweise können solche Befestigungsmittel bei aus einem Kunststoff hergestellter Haltevorrichtung aus einem Filmscharnier oder dergleichen gebildet sein. Wenn die Stirnplatte der Haltevorrichtung an der Innenfläche des Teils befestigt ist, läßt sich der Zusatzkörper, nachdem er seinen Zweck des Zentrierens der Öffnung der Stirnplatte in bezug auf die Öffnung des Teils erfüllt hat, durch Wegbrechen der Filmscharniere ohne weiteres von der Haltevorrichtung entfernen, so daß im Anschluß daran der Sensor in die Haltevorrichtung eingesetzt werden kann.

In vorteilhafter Weiterbildung der Erfindung können die Mittel zur Festlegung des Sensors in dem Gehäuse durch eine lösbare Rastverbindung gebildet sein. An einem Körper des Sensors kann zum Zwecke der Festlegung zumindest eine Rastnase ausgebildet sein, die, wenn der Sensor in dem Gehäuse festgelegt ist, die Rastverbindung hintergreift. Die Rastverbindung gewährleistet ein konstruktiv sehr einfaches und vor allem sicheres Positionieren des Sensors in dem Gehäuse der Haltevorrichtung, wobei die Festlegung des Sensors in dem Gehäuse nach einem Hineinschieben des Sensors dorthinein ohne weiteres dadurch erfolgt, daß die Rastnase mit der Rastverbindung, z.B. gebildet durch einen Schnapphaken oder dergleichen, verrastet.

Zweckmäßigerweise ist das Gehäuse der Haltevorrichtung so bemessen, daß der Sensor nach einer Festlegung in dem Gehäuse mit einer dem Teil zugewandten Stirnfläche mit einer Außenfläche des Teils im wesentlichen bündig abschließt. Des weiteren ist die Haltevorrichtung dank des Zusammenwirkens des Zusatzkörpers mit der Öffnung des Teils während des Befestigungsvorgangs der Stirnplatte an der Innenfläche des Teils so an dem Teil befestigt, daß ein Rand der dem Teil zugewandten Stirnfläche des Sensors bei in dem Gehäuse festgelegten Sensor gleichmäßig und mit einem sehr geringen Spaltmaß von einem Rand der Öffnung des Teils beabstandet ist. Die voranstehend genannten Wirkungen tragen zum einen wesentlich zu einer optisch hohen Anmutung des Teils von einer Außenseite her betrachtet bei. Zum anderen bewirkt die gleichmäßige Beabstandung des Sensors von der in dem Teil vorgesehenen Öffnung zu einem stets zentrischen Sitz des Sensors, so daß dieser nicht an dem eigentlichen Teil anstößt und somit in seiner Funktion nicht beeinträchtigt wird.

Die Befestigung der Stirnplatte an der Innenfläche des Teils läßt sich z.B. entweder durch ein Verkleben oder durch ein Verschweißen erzielen. Für ein Verkleben ist an einer Fläche der Stirnplatte eine Klebeschicht z.B. in Form einer Klebefolie aufgebracht, mit der die Stirnplatte auf die Innenfläche des Teils aufgesetzt und somit entsprechend daran verklebt wird. Das Verkleben hat den wesentlichen Vorteil, daß dabei kein Wärmeeintrag in die Bauteile stattfindet und es somit zu keinem unerwünschten Auf- oder gar Durchschmelzen des Kunststoffs kommen kann, wenn Haltevorrichtung und das Kraftfahrzeug-Außenteil aus einem solchen gefertigt sind. Unerwünschte und dem optischen Erscheinungsbild des Kraftfahrzeug-Außenteils abträgliche Abzeichnungspunkte an den Stellen, an denen die Haltevorrichtung an der entgegengesetzten Seite des Teils befestigt ist, sind in diesem Fall mit Sicherheit ausgeschlossen.

In vorteilhafter Weiterbildung der Erfindung können die lösbaren Befestigungsmittel, durch die der Zusatzkörper innerhalb der Öffnung der Stirnplatte angebracht ist, aus zumindest einem Filmscharnier gebildet sein. Das Filmscharnier gewährleistet einerseits eine ausreichende Festigkeit, daß der Zusatzkörper beim Befestigen der Stirnplatte an der Innenfläche des Teils das gewünschte Zentrieren der beiden Öffnungen zueinander sicherstellt, und gewährleistet andererseits nach erfolgter Befestigung der Stirnplatte ohne weiteres die Möglichkeit eines gezielten Herausbrechens des Zusatzkörpers, um anschließend den Sensor in das Gehäuse der Haltevorrichtung einführen und darin festlegen zu können.

In vorteilhafter Weiterbildung der Erfindung kann der Vorsprung des Zusatzkörpers in Anpassung an die Öffnung des Teils einen kreisrunden Querschnitt aufweisen. Bspw. kann der Vorsprung die Form eines Ringsteges annehmen, der sich formbedingt automatisch zentrisch in eine kreisrunde Öffnung in dem Teil einfügt und dadurch das Zentrieren der Stirnplatte bzw. des Gehäuses der Haltevorrichtung in bezug zur Öffnung des Teils sicherstellt.

Das erfindungsgemäße Verfahren zum Anbringen eines Sensors an einem Teil mit einer Öffnung, insbesondere an einem Kraftfahrzeug-Außenteil, zeichnet sich dadurch aus, daß die erfindungsgemäße Haltevorrichtung des voranstehend erläuterten Typs mit ihrer Stirnplatte an einer Innenfläche des Teils befestigt wird, wobei der Vorsprung des Zusatzkörpers in die Öffnung eingreift, so daß die Öffnung der Stirnplatte in bezug auf die Öffnung des Teils zentrisch ausgerichtet wird. Nach erfolgter Befestigung der Stirnplatte wird der Zusatzkörper durch Lösen der Befestigungsmittel von der Haltevorrichtung entfernt, wonach der Sensor in das Gehäuse zumindest teilweise eingeführt wird. Das Anbringen des Sensors an dem Teil wird dadurch abgeschlossen, daß der Sensor in dem Gehäuse der Haltevorrichtung geeignet festgelegt wird, wie bspw. durch eine Rastverbindung in Form eines Schnapphakens oder dergleichen.

Das Befestigen der Stirnplatte an der Innenfläche des Teils kann geeignet ein Verkleben und/oder ein Verschweißen der Stirnplatte an besagter Innenfläche umfassen. Ein reines Verkleben der Stirnplatte führt zu dem wesentlichen Vorteil, daß hierbei keinerlei Gefahr des Durchzeichnens von Befestigungspunkten an einer Außenfläche des Teils besteht. Wird beim Verkleben ein Klebstoff bspw. in Form eines Klebebands oder dergleichen ausgewählt, der auf die Materialbeschaffenheit von Stirnplatte und Innenfläche des Teils geeignet abgestimmt ist, so lassen sich durch Kleben ohne weiteres gleiche Festigkeitswerte wie durch Schweißen erzielen.

Das Befestigen der Stirnplatte an der Innenfläche des Teils, das Entfernen des Zusatzkörpers und/oder das Einführen bzw. Festlegen des Sensors in das bzw. in dem Gehäuse lassen sich vorteilhafterweise mittels einer Robotereinrichtung durchführen. Insbesondere beim Befestigen der Stirnplatte an der Innenfläche des Teils ist es von großer Bedeutung, daß nach einem Aufsetzen der Stirnplatte auf die Innenfläche die Stirnplatte mit einer ausreichend hohen und gleichbleibenden Kraft für eine vorbestimmte Zeitdauer gegen das Teil gedrückt wird, wodurch bereits in kurzer Zeit ein beträchtlicher Teil der Endklebefestigkeit erzielt wird. Rein beispielhaft ist in diesem Zusammenhang auf die Verwendung von marktüblichen Klebstoffen verwiesen, bei deren Verwendung sich bereits nach einem Andrücken von 20 Sekunden 30 % der Klebefestigkeit erreichen lassen. Während des restlichen Aushärtens des Klebstoffes ist dann kein weiteres Andrücken mehr notwendig. Es versteht sich von selbst, daß das genannte Andrücken prädestiniert ist für den Einsatz einer Robotereinrichtung, mit der die Haltevorrichtung gegen das Teil zum Zwecke des Verklebens gedrückt wird.

Alternativ zum Verkleben läßt sich für den Fall, daß sowohl Haltevorrichtung als auch das Teil aus einem thermoplastischen Kunststoff hergestellt sind, das Befestigen der Stirnplatte an der Innenfläche des Teils durch ein Ultraschallschweißen erzielen. Auch ein solches Ultraschallschweißen zum Erzielen eines kontrollierten und gleichbleibenden Verbindens wird vorzugsweise durch eine Robotereinrichtung, hier in Form eines Schweißroboters durchgeführt.

Die Erfindung führt somit zu dem wesentlichen Vorteil, daß das Teil, an dem der Sensor zu befestigen ist, bis auf eine darin vorzusehende Öffnung keiner weiteren Anpassung zum späteren Anbringen des Sensors bedarf. Die erfindungsgemäße Haltevorrichtung wird einfach rückwärtig, d.h. auf die Innenfläche des Teils befestigt und nimmt anschließend den Sensor auf. Die Haltevorrichtung bestimmt die Lage des Sensors und damit das von außen sichtbare Spaltmaß zwischen einem Rand der von außen sichtbaren Stirnfläche des Sensors und dem Rand der in dem Teil ausgebildeten Öffnung. Durch den angespritzten Zusatzkörper innerhalb der Öffnung der Stirnplatte wird sichergestellt, daß die Haltevorrichtung mit der Öffnung der Stirnplatte in gewünschter Weise exakt und ohne großen Aufwand beim Befestigen der Stirnplatte an der Innenfläche des Teils mit der darin ausgebildeten Öffnung zentrisch ausgerichtet wird.

Neben einem sauberen und gleichbleibenden Spaltmaß zwischen dem Rand der Stirnfläche des Sensors und dem Rand der in dem Teil ausgebildeten Öffnung ist auch ein sauberes Anliegen eines Entkopplungsrings des Sensors an dem Rand der Öffnung in dem Teil gewährleistet, was ein wirkungsvolles Schwingen des Ultraschallsensors sicherstellt.

Im Ergebnis lassen sich somit erfindungsbedingt die Qualität bei der Montage des Sensors an z.B. einem Kraftfahrzeug-Außenteil mit sehr geringem Aufwand und in stets wiederholbarer Weise erhöhen.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt eine perspektivische Seitenansicht einer erfindungsgemäßen Haltevorrichtung mit einem getrennt davon gezeigten Zusatzkörper.
- Figur 2: zeigt eine perspektivische Seitenansicht der erfindungsgemäßen Haltevorrichtung von der Stirnplatte aus gesehen mit angeformtem Zusatzkörper.
- Figur 3: zeigt eine perspektivische Seitenansicht der Haltevorrichtung von Figur 1 und Figur 2 mit einem darin eingesetzten Sensor.

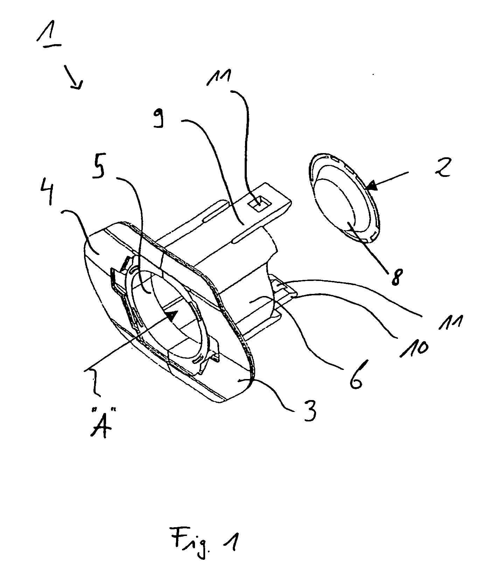

Figur 1 zeigt in einer perspektivischen Seitenansicht eine erfindungsgemäße Haltevorrichtung 1 und getrennt davon einen Zusatzkörper 2, der Teil der Haltevorrichtung 1 ist. Die Haltevorrichtung 1 besteht aus einer Stirnplatte 3 mit einer vorderen Stirnfläche 4. In einem mittleren Bereich der Stirnplatte 3 ist eine Öffnung 5 ausgebildet. An einer hinteren Stirnfläche der Stirnplatte 3 entgegengesetzt zur vorderen Stirnfläche 4 ist ein Gehäuse 6 um die Öffnung 5 herum angeformt, welches Gehäuse sich orthogonal zur Ebene der Stirnplatte 3 von der hinteren Stirnfläche weg erstreckt. In der hier gezeigten Ausführungsform ist die Öffnung 5 kreisrund ausgebildet und in Entsprechung dazu hat das Gehäuse 6 einen im wesentlichen kreisrunden Querschnitt.

Zweckmäßigerweise wird die Haltevorrichtung 1 aus einem thermoplastischen Kunststoff spritzgegossen, was sich vorteilhaft in günstigen Herstellungskosten niederschlägt. Als Beispiel für einen solchen thermoplastischen Kunststoff ist Polyamid genannt. Es können jedoch ohne weiteres auch beliebige andere geeignete Thermoplaste zur Herstellung der Haltevorrichtung 1 verwendet werden. Alternativ dazu ist auch möglich, die Haltevorrichtung 1 aus einer duromeren Formmasse auszubilden, wie z.B. ein PUR-System.

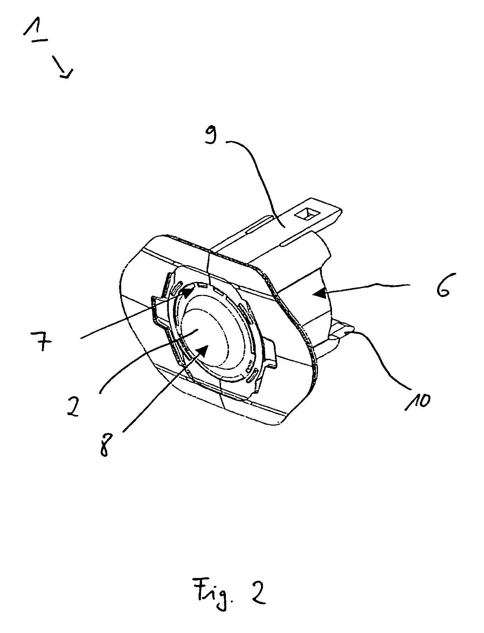

Der Zusatzkörper 2 ist im Bereich der Öffnung 5 an der Haltevorrichtung 1 angeformt. Wie in der perspektivischen Seitenansicht von Figur 2 zu erkennen ist, kann der Zusatzkörper 2 entlang eines Randes der Öffnung 5 über zumindest einen oder aber mehrere Filmscharniere 7 angeformt sein. Der Zusatzkörper 2 weist in einem mittigen Bereich davon einen Vorsprung 8 auf, der von der Ebene der Stirnplatte 3 nach außen vorne abkragt. Der Vorsprung 8 kann bspw. in Form eines umlaufenden Ringsteges oder dergleichen ausgebildet sein.

Das Gehäuse 6 ist in einem Bereich abgewandt von der hinteren Stirnfläche offen ausgebildet und geeignet so dimensioniert, daß stirnseitig von der offenen Seite her ein handelsüblicher Sensor, bspw. ein Ultraschallsensor eingeführt werden kann. Das Gehäuse 6 weist in einem Randbereich davon einen oberen Raststeg 9 und einen unteren Raststeg 10 auf, die in einer Richtung der Längsachse des Gehäuses 6 elastisch bewegbar sind. An einem jeweiligen freien Ende des oberen Raststegs 9 und des unteren Raststegs 10 ist eine Rastfläche 11 ausgebildet, die mit einer an einem Körper eines (nicht gezeigten) Sensors angeformten Rastnase zusammenwirken, falls der Sensor weit genug in das Gehäuse 6 hineingeschoben wird. Durch das Zusammenwirken der jeweiligen Rastnase mit den Raststegen 9, 10 wird der Sensor in dem Gehäuse 6 festgelegt.

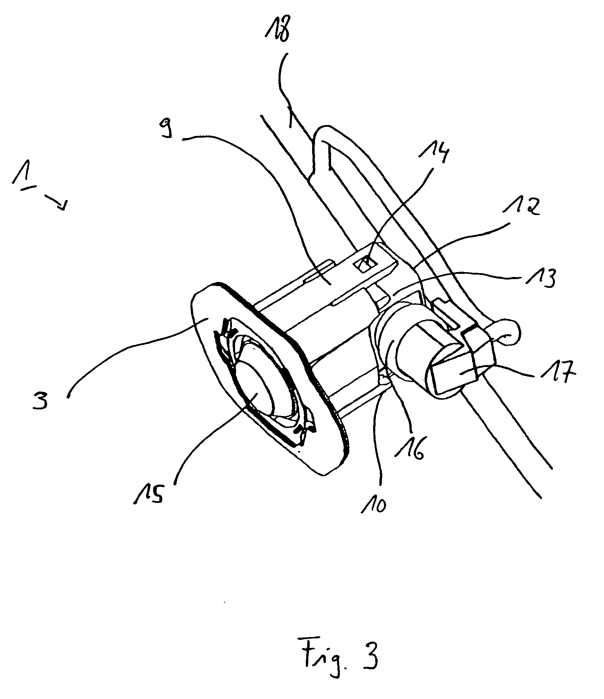

Die Haltevorrichtung 1 ist dazu konzipiert, den Ultraschallsensor über das Gehäuse 6 in sich aufzunehmen (Fig. 3) und an einem Kraftfahrzeug-Verkleidungsteil oder dergleichen, bspw. an einem Stoßfänger, befestigt zu sein. Das Verkleidungsteil weist an einer Stelle, wo die Haltevorrichtung 1 von einer Innenseite her daran befestigt ist, eine Öffnung auf, so daß sich der durch die Haltevorrichtung 1 gehaltene Ultraschallsensor mit seiner Stirnseite durch die Öffnung des Verkleidungsteils hindurch erstreckt, um in gewünschter Weise Signale zur Abstandsmessung zu anderen Gegenständen bereitzustellen.

Nachfolgend ist im einzelnen erläutert, wie die Befestigung des Ultraschallsensors an einem Verkleidungsteil mittels der Haltevorrichtung 1 erfolgt.

Die vordere Stirnfläche 4 der Stirnplatte 3 wird zunächst geeignet an einer inneren Fläche des Verkleidungsteils in einem Bereich befestigt, in dem jeweils eine Öffnung in dem Verkleidungsteil ausgebildet ist. Hierzu kann auf der vorderen Stirnfläche 4 der Stirnplatte 3 eine Klebefolie oder dergleichen aufgebracht sein, mittels der die Stirnplatte 3 über die vordere Stirnfläche 4 an der Innenfläche des Verkleidungsteils verklebt wird. Alternativ dazu läßt sich die Stirnplatte 3 an der Innenfläche des Verkleidungsteils auch durch Schweißen, wie bspw. ein Ultraschallschweißen, verbinden, falls sowohl die Haltevorrichtung 1 als auch das Verkleidungsteil aus einem thermoplastischen Kunststoff hergestellt sind.

Wenn die vordere Stirnfläche 4 der Stirnplatte 3 auf die Innenfläche des Verkleidungsteil aufgesetzt wird, so gelangt dabei der Vorsprung 8 des Zusatzkörpers 2 in Eingriff mit der Öffnung, die in dem Verkleidungsteil selbst ausgebildet ist. Der Vorsprung 8 ist hierbei mit seiner Außenkontur geeignet auf einen Randbereich der Öffnung des Verkleidungsteils abgestimmt. Falls die Öffnung des Verkleidungsteils kreisrund ist, so ist bspw. ein Durchmesser des Vorsprungs 8 geringfügig kleiner als der Durchmesser der Öffnung des Verkleidungsteils, so daß sich der Vorsprung 8 klemmfrei in die Öffnung des Verkleidungsteils einführen läßt und dabei gleichzeitig der Vorsprung 8 zentrisch innerhalb der Öffnung des Verkleidungsteils aufgenommen ist. Da der Vorsprung 8 selbst zentrisch innerhalb der Öffnung 5 der Stirnplatte 3 angeordnet ist, wie aus der perspektivischen Ansicht von Figur 2 ersichtlich, ist durch den genannten Eingriff des Vorsprungs 8 in die Öffnung des Verkleidungsteils sichergestellt, daß dadurch auch die Öffnung 5 der Stirnplatte 3 in bezug auf die Öffnung des Verkleidungsteils zentrisch ausgerichtet ist. Die Dicke der Filmscharniere, über die der Zusatzkörper 2 innerhalb der Öffnung 5 angeordnet ist, ist ausreichend dick bemessen, daß der Zusatzkörper während des Befestigungsvorgangs der Stirnplatte 3 an der Innenfläche des Verkleidungsteils ein sicheres Zentrieren gewährleistet.

Wenn die Haltevorrichtung 1 an der Innenfläche des Verkleidungsteils befestigt ist, wobei die Öffnung 5 dank des Zusatzkörpers 2 exakt auf die Öffnung des Verkleidungsteils ausgerichtet ist, läßt sich der Zusatzkörper 2 durch eine Beaufschlagung mit einer Kraft nach innen (in Figur 1 durch einen Pfeil A angedeutet) aus der Öffnung 5 herausbrechen, so daß der Zusatzkörper 2 nach Ablösen der Filmscharniere 7 durch das Gehäuse 6 hindurch nach hinten herausfallen kann. Nach Herauslösen des Zusatzkörpers besteht nun eine freie Verbindung zwischen der Öffnung des Verkleidungsteils, der Öffnung 5 und dem Innenraum des Gehäuses 6. Dies ermöglicht nachfolgend ein Einführen des Ultraschallsensors von hinten in den offenen Bereich des Gehäuses 6.

Wenn der Ultraschallsensor ausreichend weit in das Gehäuse 6 hineingeführt ist, verrasten der obere Raststeg 9 und der untere Raststeg 10 mit ihren Rastflächen 11 an den jeweiligen Rastnasen, die an dem Körper des Ultraschallsensors angeformt sind, so daß dadurch der Ultraschallsensor geeignet in dem Gehäuse 6 festgelegt ist. In seiner festgelegten Position erstreckt sich ein vorderer Bereich des Ultraschallsensors durch die Öffnung 5 hindurch, so daß eine Stirnfläche des Ultraschallsensors mit einer Außenfläche des Verkleidungsteils bündig abschließen kann. Hierbei ist um einen Rand der Stirnfläche herum ein sogenannter Entkopplungsring aus einem elastischen Material wie z.B. ein Silikon vorgesehen, der sich an einen Innenrand der Öffnung des Verkleidungsteils anlegt. Dieser Entkopplungsring stellt sicher, daß der Ultraschallsensor funktionsgerecht in Schwingung geraten kann, so daß die gewünschten Signale zur Abstandsmessung erzeugt werden können.

Bei Auftreten eines Defektes in dem Ultraschallsensor, oder im Falle einer Beschädigung des Verkleidungsteils bedingt durch einen Auffahrunfall oder dergleichen, läßt sich der Ultraschallsensor durch Anheben des oberen und unteren Raststeges 9, 10 ohne weiteres aus der Haltevorrichtung 1 entfernen, um einen Austausch des Sensors oder aber einen Austausch des Verkleidungsteils vornehmen und somit das noch jeweils intakte Teil weiter verwenden zu können.

Alternativ zur Verwendung eines Ultraschallsensors ist es ohne weiteres möglich, in der Haltevorrichtung 1 einen beliebig anderen Sensortyp aufzunehmen, der sich z.B. zur Abstandsmessung eignet, wie z.B. ein Radarsensor. Die erfindungsgemäße Haltevorrichtung 1 läßt sich darüber hinaus auch zur Halterung von sonstigen Sensoren einsetzen, wo es auf eine preisgünstige und positionsgenaue Anbringung des Sensors an einem Teil ankommt.

Figur 3 zeigt die Haltevorrichtung 1 mit einem darin eingesetzten Ultraschallsensor 12. Wie voranstehend erläutert, ist der Ultraschallsensor 12 von der hinteren offenen Seite des Gehäuses 6 in letzteres eingeführt und mit seinem Körper 13 soweit in dem Gehäuse 6 aufgenommen, daß Rastnasen 14, die jeweils an einer Ober- und Unterseite des Körpers 13 angeformt sind, mit dem oberen und unteren Raststeg 9, 10 verrasten. In dieser verrasteten Position erstreckt sich eine Stirnfläche 15 des Ultraschallsensors 12 durch die Öffnung 5 hindurch, so daß die Stirnfläche mit einer Außenfläche des (nicht gezeigten) Verkleidungsteils bündig abschließen kann. Der Durchmesser, der von außen sichtbaren Stirnfläche 15 ist dabei geringfügig kleiner als der Durchmesser der Öffnung in dem Verkleidungsteil gewählt, so daß sich für eine hohe Qualitätsanmutung ein gleichmäßig geringer Abstand zwischen dem Rand der Stirnfläche 15 und dem Rand der Öffnung in dem Verkleidungsteil einstellt.

In einem seitlichen Bereich des Körpers 13 weist der Ultraschallsensor 12 einen Steckeranschluß 16 auf, an dem wie in Figur 3 gezeigt ein Stecker 17 einer Datenleitung 18 angeschlossen werden kann, welche Datenleitung an das Bordnetz eines Kraftfahrzeuges angeschlossen ist. Somit lassen sich die von dem Ultraschallsensor 12 erzeugten Signale an das Bordnetz und somit an ein Abstandswarnsystem übermitteln und entsprechend zur Erzeugung von z.B. akustischen Signaltönen entsprechend verarbeiten.

## Patentansprüche

1. Haltevorrichtung (1) für einen Sensor (12) zur Anbringung an einem Teil mit einer Öffnung, insbesondere an einem Kraftfahrzeug-Außenteil, mit
- einer Stirnplatte (3), die an einer Innenfläche des Teils befestigbar ist und eine Öffnung (5) aufweist,
- einem an die Stirnplatte (3) angrenzenden Gehäuse (6) zur Aufnahme zumindest eines Teils des Sensors (12), das Mittel (9, 10, 11) zur Festlegung des Sensors (12) in dem Gehäuse (6) aufweist, **dadurch gekennzeichnet, daß** die Haltevorrichtung einen Zusatzkörper (2) aufweist, der durch lösbare Befestigungsmittel (7) innerhalb der Öffnung (5) der Stirnplatte (3) angebracht ist und einen von der Stirnplatte (3) nach außen abkragenden Vorsprung aufweist, der so mit der Öffnung des Teils in Eingriff bringbar ist, daß die Öffnung (5) der Stirnplatte (3) in bezug auf die Öffnung des Teils zentrisch ausgerichtet ist.

2. Haltevorrichtung (1) nach Anspruch 1, bei der die Mittel zur Festlegung des Sensors (12) in dem Gehäuse (6) durch eine lösbare Rastverbindung (9, 10) gebildet sind.

3. Haltevorrichtung (1) nach Anspruch 2, bei der an einem Körper (13) des Sensors (12) zumindest eine Rastnase (14) ausgebildet ist, die die Rastverbindung (9, 10) bei in dem Gehäuse (6) festgelegtem Sensor (12) hintergreift.

4. Haltevorrichtung (1) nach einem der Ansprüche 1 bis 3, bei der der Sensor (12) in dem Gehäuse (6) so festgelegt ist, daß eine dem Teil zugewandte Stirnfläche (15) des Sensors (12) mit einer Außenfläche des Teils im wesentlichen bündig abschließt.

5. Haltevorrichtung (1) nach einem der Ansprüche 1 bis 4, bei der ein Rand einer dem Teil zugewandten Stirnfläche (15) des Sensors (12) bei in dem Gehäuse (6) festgelegtem Sensor (12) gleichmäßig von einem Rand der Öffnung des Teils beabstandet ist.

6. Haltevorrichtung (1) nach einem der Ansprüche 1 bis 5, bei der die Stirnplatte (3) mit dem Teil verklebt ist.

7. Haltevorrichtung (1) nach einem der Ansprüche 1 bis 6, bei der die Stirnplatte (3) mit dem Teil verschweißt ist.

8. Haltevorrichtung (1) nach einem der Ansprüche 1 bis 7, bei der bei an dem Teil befestigter Stirnplatte (3) der Zusatzkörper (2) entfernt ist.

9. Haltevorrichtung (1) nach einem der Ansprüche 1 bis 8, die einstückig aus einem Kunststoff hergestellt ist.

10. Haltevorrichtung (1) nach Anspruch 9, bei der die lösbaren Befestigungsmittel aus zumindest einem Filmscharnier (7) gebildet sind.

11. Haltevorrichtung (1) nach einem der Ansprüche 1 bis 10, bei der der Vorsprung (8) in Anpassung an die Öffnung (5) des Teils einen kreisrunden Querschnitt aufweist.

12. Haltevorrichtung (1) nach Anspruch 11, bei der der Vorsprung (8) in Form eines Ringstegs ausgebildet ist.

13. Verfahren zum Anbringen eines Sensors (12) an einem Teil mit einer Öffnung, insbesondere an einem Kraftfahrzeug-Außenteil, mit den Schritten:
- Bereitstellen einer Haltevorrichtung (1) nach einem der Ansprüche 1 bis 12,
- Befestigen der Stirnplatte (3) an einer Innenfläche des Teils, wobei der Vorsprung (8) des Zusatzkörpers (2) in die Öffnung des Teils eingreift, so daß die Öffnung (5) der Stirnplatte (3) in bezug auf die Öffnung des Teils zentrisch ausgerichtet wird,
- Entfernen des Zusatzkörpers (2) durch Lösen der Befestigungsmittel (7),
- Einführen des Sensors (12) in das Gehäuse (6), und
- Festlegen des Sensors (12) in dem Gehäuse (6).

14. Verfahren nach Anspruch 13, bei dem der Sensor (12) in dem Gehäuse (6) so festgelegt wird, daß eine dem Teil zugewandte Stirnfläche (15) des Sensors (12) mit einer Außenfläche des Teils im wesentlichen bündig abschließt.

15. Verfahren nach Anspruch 13 oder Anspruch 14, bei dem der Sensor (12) in dem Gehäuse (6) so festgelegt wird, daß ein Rand einer dem Teil zugewandten Stirnfläche (15) des Sensors (12) bei in dem Gehäuse (6) festgelegtem Sensor gleichmäßig von einem Rand der Öffnung des Teils beabstandet wird.

16. Verfahren nach einem der Ansprüche 13 bis 15, bei dem das Befestigen der Stirnplatte (3) an der Innenfläche des Teils ein Verkleben umfaßt.

17. Verfahren nach einem der Ansprüche 13 bis 16, bei dem das Befestigen der Stirnplatte (3) an der Innenfläche des Teils ein Verschweißen umfaßt.

18. Verfahren nach einem der Ansprüche 13 bis 17, bei dem das Festlegen des Sensors (12) in dem Gehäuse (6) ein Verrasten des Sensors (12) mit einer Rastverbindung (9, 10) des Gehäuses umfaßt.

19. Verfahren nach einem der Ansprüche 13 bis 18, bei dem das Handling der Haltevorrichtung (1) zum Befestigen der Stirnplatte (3) an der Innenfläche des Teils, das Entfernen des Zusatzkörpers (2) und/oder das Einführen bzw. Festlegen des Sensors (12) in das bzw. in dem Gehäuse (6) mittels einer Robotereinrichtung erfolgt.

## Claims

1. Retainer (1) for a sensor (12) for mounting on a part with an opening, in particular on a motor vehicle outer part, having
- an endplate (3), which can be attached to an inner surface of the part and comprises an opening (5),
- a housing (6) bordering on the endplate (3), for holding at least one part of the sensor (12), which comprises means (9, 10, 11) for fixing the sensor (12) in the housing (6), **characterized in that** the retainer has an additional member (2), which is attached by separable means of mounting (7) inside the opening (5) of the endplate (3) and has a projection, abutting outwardly from the endplate (3), which can be engaged with the opening of the part so that the opening (5) of the endplate (3) is centrically aligned relative to the opening of the part.

2. Retainer (1) according to claim 1, wherein the means for fixing the sensor (12) in the housing (6) are formed by a separable snap-in connection (9, 10).

3. Retainer (1) according to claim 2, wherein at least one snap-in lug (14) is formed on a body (13) of the sensor (12), which grips behind the snap-in connection (9, 10) when sensor (12) is fixed in the housing (6).

4. Retainer (1) according to any one of claims 1 to 3, wherein the sensor (12) is fixed in the housing (6) so that terminates substantially flush with an outer surface of the part.

5. Retainer (1) according to any one of claims 1 to 4, wherein an edge of a front surface (15), facing the part, of the sensor (12) is uniformly spaced from an edge of the opening of the part, when sensor (12) is fixed in the housing (6).

6. Retainer (1) according to any one of claims 1 to 5, wherein the endplate (3) is glued with the part.

7. Retainer (1) according to any one of claims 1 to 6, wherein the endplate (3) is welded with the part.

8. Retainer (1) according to any one of claims 1 to 7, wherein the additional member (2) is removed, when endplate (3) is attached to the part.

9. Retainer (1) according to any one of claims 1 to 8, which is produced as one integral part from a plastic.

10. Retainer (1) according to claim 9, wherein the separable means of mounting are formed from at least one film hinge (7).

11. Retainer (1) according to any one of claims 1 to 10, wherein the projection (8) matching the opening (5) of the part has a circular cross section.

12. Retainer (1) according to claim 11, wherein the projection (8) is formed in the shape of an annular ridge.

13. Method for mounting a sensor (12) on a part with an opening, in particular on a motor vehicle outer part, comprising the steps:
- providing a retainer (1) according to any one of claims 1 to 12,
- attaching the endplate (3) to an inner surface of the part, whereby the projection (8) of the additional member (2) is engaged with the opening of the part, so that the opening (5) of the endplate (3) is centrically aligned relative to the opening of the part,
- removing the additional member (2) by separating the means of mounting (7),
- inserting the sensor (12) into the housing (6), and
- fixing the sensor (12) in the housing (6).

14. Method according to claim 13, wherein the sensor (12) is fixed in the housing (6) in such a way that a front surface (15), facing the part, of the sensor (12) terminates substantially flush with an exterior surface of the part.

15. Method according to claim 13 or claim 14, wherein the sensor (12) is fixed in the housing (6) in such a way that an edge of a front surface (15), facing the part, of the sensor (12) is uniformly spaced from an edge of the opening of the part, when sensor is fixed in the housing (6).

16. Method according to any one of claims 13 to 15,
wherein attaching the endplate (3) to the inner surface of the part consists of gluing.

17. Method according to any one of claims 13 to 16,
wherein attaching the endplate (3) to the inner surface of the part consists of welding.

18. Method according to any one of claims 13 to 17,
wherein fixing the sensor (12) in the housing (6) comprises locking of the sensor (12) with a snap-in connection (9, 10) of the housing.

19. Method according to any one of claims 13 to 18,
wherein the handling of the retainer (1) for attaching the endplate (3) to the inner surface of the part, removing the additional member (2) and/or inserting and/or fixing the sensor (12) into and/or in the housing (6) are performed by a robotic device.

## Revendications

1. Dispositif de maintien (1) pour un capteur (12) pour l'agencement sur une pièce pourvue d'une ouverture, en particulier sur une pièce extérieure de véhicule automobile, comportant
- une plaque frontale (3) qui est susceptible d'être fixée sur une surface intérieure de la pièce et qui présente une ouverture (5),
- un boîtier (6) adjacent à la plaque frontale (3) et destiné à recevoir une partie au moins du capteur (12) et comprenant des moyens (9, 10, 11) pour immobiliser le capteur (12) dans le boîtier (6),
**caractérisé en ce que** le dispositif de maintien comprend un corps supplémentaire (2) qui est agencé à l'intérieur de l'ouverture (5) de la plaque frontale (3) par des moyens de fixation détachables (7) et qui comprend une saillie en porte-à-faux de la plaque frontale vers l'extérieur, qui est susceptible d'être amenée en engagement avec l'ouverture de la pièce de telle sorte que l'ouverture (5) de la plaque frontale (3) est orientée de façon centrée par rapport à l'ouverture de la pièce.

2. Dispositif de maintien (1) selon la revendication 1, dans lequel les moyens pour immobiliser le capteur (12) dans le boîtier (6) sont réalisés par une liaison à enclenchement détachable (9, 10).

3. Dispositif de maintien (1) selon la revendication 2, dans lequel au moins un bec d'enclenchement (14) est réalisé sur un corps (13) du capteur (12), bec qui engage par l'arrière la liaison à enclenchement (9, 10) lorsque le capteur (12) est immobilisé dans le boîtier (6).

4. Dispositif de maintien (1) selon l'une des revendications 1 à 3, dans lequel le capteur (12) est immobilisé dans le boîtier (6) de telle sorte qu'une surface frontale (15) du capteur (12) tournée vers la pièce se termine sensiblement en affleurement avec une surface extérieure de la pièce.

5. Dispositif de maintien (1) selon l'une des revendications 1 à 4, dans lequel un bord d'une surface frontale (15) du capteur (12) tournée vers la pièce est espacé de façon régulière d'un bord de l'ouverture de la pièce lorsque le capteur (12) est immobilisé dans le boîtier (6).

6. Dispositif de maintien (1) selon l'une des revendications 1 à 5, dans lequel la plaque frontale (3) est collée sur la pièce.

7. Dispositif de maintien (1) selon l'une des revendications 1 à 6, dans lequel la plaque frontale (3) est soudée sur la pièce.

8. Dispositif de maintien (1) selon l'une des revendications 1 à 7, dans lequel le corps supplémentaire (2) est enlevé lorsque la plaque frontale (3) est fixée sur la pièce.

9. Dispositif de maintien (1) selon l'une des revendications 1 à 8, qui est réalisé d'un seul tenant en matière plastique.

10. Dispositif de maintien (1) selon la revendication 9, dans lequel les moyens de fixation détachables sont formés par au moins une charnière en film (7).

11. Dispositif de maintien (1) selon l'une des revendications 1 à 10, dans lequel la saillie (8) présente une section transversale circulaire en adaptation à l'ouverture (5) de la pièce.

12. Dispositif de maintien (1) selon la revendication 11, dans lequel la saillie (8) est réalisée sous la forme d'une barrette annulaire.

13. Procédé pour agencer un capteur (12) sur une pièce pourvue d'une ouverture, en particulier sur une pièce extérieure de véhicule automobile, comprenant les étapes suivantes :
- fournir un dispositif de maintien (1) selon l'une des revendications 1 à 12,
- fixer la plaque frontale (3) sur une surface intérieure de la pièce, la saillie (8) du corps supplémentaire (2) venant s'engager dans l'ouverture de la pièce, de sorte que l'ouverture (5) de la plaque frontale (3) est orientée de façon centrée par rapport à l'ouverture de la pièce,
- enlever le corps supplémentaire (2) par détachement des moyens de fixation (7),
- introduire le capteur (12) dans le boîtier (6), et
- fixer le capteur (12) dans le boîtier (6).

14. Procédé selon la revendication 13, dans lequel on immobilise le capteur (12) dans le boîtier (6) de telle sorte qu'une surface frontale (15) du capteur (12) tournée vers la pièce se termine sensiblement en affleurement avec une surface extérieure de la pièce.

15. Procédé selon la revendication 13 ou selon la revendication 14, dans lequel on immobilise le capteur (12) dans le boîtier (6) de telle sorte qu'un bord d'une surface frontale (15) du capteur (12) tournée vers la pièce est espacé de façon régulière d'un bord de l'ouverture de la pièce lorsque le capteur est immobilisé dans le boîtier (6).

16. Procédé selon l'une des revendications 13 à 15, dans lequel la fixation de la plaque frontale (3) sur la surface intérieure de la pièce comprend un collage.

17. Procédé selon l'une des revendications 13 à 16, dans lequel la fixation de la plaque frontale (3) sur la surface intérieure de la pièce comprend un soudage.

18. Procédé selon l'une des revendications 13 à 17, dans lequel la fixation du capteur (12) dans le boîtier (6) comprend un enclenchement du capteur (12) avec une liaison à enclenchement (9, 10) du boîtier.

19. Procédé selon l'une des revendications 13 à 18, dans lequel la manipulation du dispositif de maintien (1) pour fixer la plaque frontale (3) sur la surface intérieure de la pièce, l'enlèvement du corps supplémentaire (2) et/ou l'introduction ou l'immobilisation du capteur (12) dans le boîtier (6) s'effectue au moyen d'un système-robot.
